# EUROPÄISCHE PATENTSCHRIFT

(11) **EP 1 521 683 B1**
(45) Veröffentlichungstag und Bekanntmachung des Hinweises auf die Patenterteilung: **14.09.2011**
(21) Anmeldenummer: 03732507.3
(22) Anmeldetag: 30.05.2003
(51) Int. Cl.: B60G 9/00, B60B 35/04

(54) **FAHRZEUGSTARRACHSE MIT INTEGRIERTEN LÄNGSLENKERN**
RIGID VEHICLE AXLE COMPRISING INTEGRATED TRAILING ARMS
ESSIEU RIGIDE DE VEHICULE A BRAS OSCILLANTS LONGITUDINAUX INTEGRES

(30) Priorität: 11.07.2002 DE 10231377
(43) Veröffentlichungstag der Anmeldung: 13.04.2005
(73) Patentinhaber: Daimler AG, 70327 Stuttgart (DE)
(72) Erfinder: ABRAT, Dunja, 34479 Breuna (DE); SCHÜTTE, Olaf, 63906 Erlenbach am Main (DE)
(74) Vertreter: JENSEN & SON
(86) Internationale Anmeldenummer: PCT/EP2003/005684
(87) Internationale Veröffentlichungsnummer: WO 2004/007222

(56) Entgegenhaltungen:
- DE-A- 10 060 312
- DE-A- 19 519 576
- GB-A- 582 997

## Beschreibung

Die Erfindung betrifft eine Fahrzeugstarrachse aus einem Achskörper, mit an dessen Enden angeordneten Achszapfen oder Radträgern, und mindestens zwei starr am Achskörper befestigten Längslenkern, wobei jede Hälfte der Fahrzeugstarrachse - von der Achsenmitte aus betrachtet - hintereinander angeordnet einen Achskörperabschnitt, einen Längslenkerabschnitt und einen Radkopfabschnitt umfasst und wobei der Radkopfabschnitt mindestens aus einem Achszapfen oder einem Radträger besteht.

Aus der gattungsbildenden DE 296 16 257 U1 ist eine luftgefederte Fahrzeugstarrachse bekannt, die aus einem Achsrohr und daran angeschweißten Längslenkern besteht. Auf das Achsrohr, das an seinen beiden Enden jeweils als Achszapfen ausgebildet ist, sind beidseitig Längslenker mit entsprechenden Aufsteckbohrungen aufgeschoben. Entlang der Aufsteckbohrungen sind die Längslenker mit dem Achsrohr verschweißt. Der Längslenker ist nach hinten über das Achsrohr hinaus verlängert. Sein dortiges freies Ende dient als Auflage einer Luftfeder. U.a. aufgrund der genannten Verlängerung ist der Längslenker ein auf Biegung belastetes Bauteil. Um eine Schwächung des Längslenkers durch die Aufsteckbohrungen zu verringern, muss das Querschnittsprofil des Längslenkers relativ groß ausgelegt werden. Zudem liegen im Bereich der Schweißnähte die Materialschichten des Achsrohres und des Längslenkers radial zum Achskörper übereinander. Derartige Materialdopplungen und Versteifungsmaßnahmen tragen nachteilig zur Höhe der ungefederten Masse bei.

Ferner ist aus der DE 100 60 312 A1 ein Achsrohr für eine Fahrzeugachse bekannt, das zwischen den Achsstummeln bzw. -zapfen aus Stabilitäts- und Gewichtsreduktionsgründen mehrere rohrförmige Abschnitte unterschiedlichen Durchmessers hat. Diese einzelnen Achsabschnitte sind z.B. durch Reibschweißen stumpf aneinandergefügt.

Der vorliegenden Erfindung liegt die Problemstellung zugrunde, eine Fahrzeugstarrachse zu entwickeln, mit der der Fahrkomfort und die Fahrsicherheit erhöht sowie der Reifenverschleiß vermindert wird. Gleichzeitig soll der Aufbau der Achse eine einfache Anpassung an verschiedene selbstfahrende und/oder geschleppte Fahrzeuge erleichtern.

Diese Problemstellung wird mit den Merkmalen des Hauptanspruches gelöst. Dazu sind die Achsrohrabschnitte und die Längslenkerabschnitte zumindest entlang der Achsmittellinie im Bereich der gemeinsamen Kontaktzonen aus einem geschlossenen Hohlprofil gefertigt. Die mittlere Wandstärke der Achsrohrabschnitte ist kleiner als die mittlere Wandstärke der Längslenker. Die Achsrohrabschnitte sind mit den Längslenkerabschnitten und die Längslenkerabschnitte mit dem Radkopfabschnitten verschweißt. Die zueinander benachbarten Achsrohr- und Längslenkerabschnitte sind in den Bereichen der Verschweißungen zentrierend ineinander gesteckt, wobei die Längen der zentrierenden Überlappungen kleiner als das Fünffache der mittleren Wandstärke der Achsrohrabschnitte sind.

Derartige Fahrzeugstarrachsan werden u.a. als Anhängerachsen für schwere Nutzfahrzeuge benutzt. Die Teile Achskörperabschnitt, Längslenkerabschnitt und Radkopfabschnitt werden je nach Spurweite und zulässiger Achslast zusammengestellt und jeweils an den entsprechenden Enden miteinander verschweißt. Beim Zusammenstellen kann z.B. um eine Achse für einen Anhänger zu gestalten, deren Spurbreite größer ist als die Standartspurbreite, ein längerer Achskörper verwendet werden. Anstelle des längeren Achskörpers können bei unveränderter Rahmenbreite auch längere Achszapfen oder breitere Längslenkerabschnitte benutzt werden.

Durch keine oder nur kurze, zentrierende Überlappungen der Abschnitte in den Bereichen der Schweißnähte werden Materialdopplungen in der Schweißzone weitgehend vermieden. U.a. dadurch wird das Achsgewicht ohne Festigkeitsverlust reduziert. Zur weiteren Verminderung des Achsgewichts werden die Wandstärken des Achsrohres kleiner gewählt als die Wandstärken der hochbelasteten Längslenker. Da in der Regel die Achsrohrabschnitte gleichzeitig einen größeren mittleren Durchmesser haben als die hohlprofiligen Bereiche der Längslenkerabschnitte, sind diese unterschiedlichen Achsbaugruppen bezüglich der Festigkeit und Steifigkeit dem Belastungsprofil optimal angepasst.

Die Gewichtsreduktion verringert die ungefederte Achsmasse und mindert somit u.a. die Trampelneigung der Starrachse. Letzteres verbessert die Bodenhaftung und somit die Fahrsicherheit. Auch wirkt sich das positiv auf die Standzeit der Reifen aus.

Weitere Einzelheiten der Erfindung ergeben sich aus den Unteransprüchen und der nachfolgenden Beschreibung einer schematisch dargestellten Ausführungsform.
- Figur 1:: äußerer Teil einer Fahrzeugstarrachse in dimetri- scher Darstellung;
- Figur 2:: Seitenansicht zu Figur 1;
- Figur 3:: Teil des Achsrohrabschnitts mit dem Längslenkerab- schnitt in dimetrischer Darstellung;
- Figur 4:: Frontansicht der Starrachse ohne Anbauten;
- Figur 5:: Detailansicht der Trennfuge zwischen Achsrohr- abschnitt und Längslenkerabschnitt.

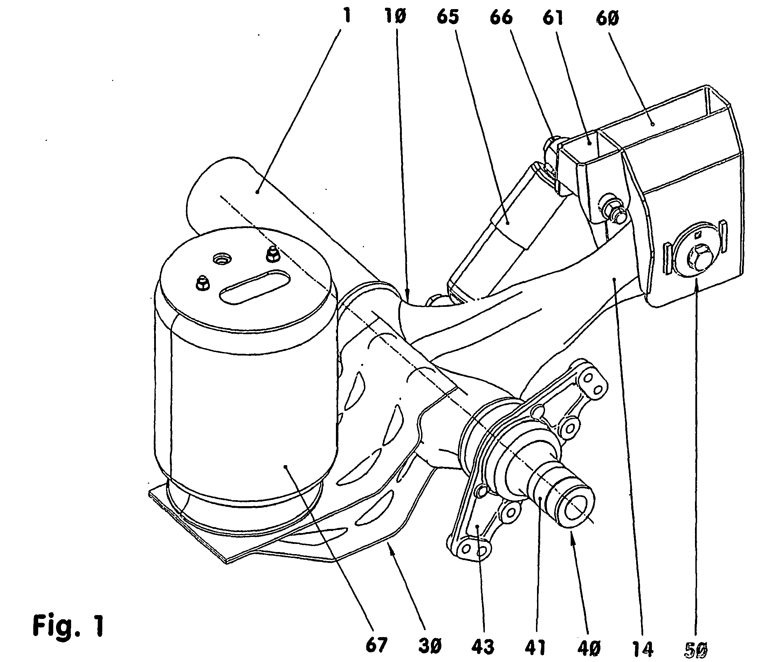

Die Figuren 1 bis 3 zeigen beispielhaft einen rechten äußeren Bereich einer geschleppten Nutzfahrzeuganhänger- oder Aufliegerachse ohne Rad und Bremse.

Nach Figur 1 umfasst der dargestellte Achsteil einen Achskörperabschnitt (1), einen rechten Längslenkerabschnitt (10) und einen Radkopfabschnitt (40). Der Längslenkerabschnitt (10) ist an seinem vorderen - z.B. in Fahrtrichtung weisenden - Ende mittels eines Elastomerkörpers in einem fahrzeugaufbauseitig gelagerten Lagerbock (60) in einem Gelenklager (50) kardanisch schwenkbar befestigt. Er ist gegenüber dem Lagerbock (60) mittels eines Stoßdämpfers (65) abgestützt. Das hintere Ende des Längslenkerabschnitts (10) stützt sich über eine Luftfeder (67) am nicht dargestellten Fahrzeugaufbau ab.

Der Achskörperabschnitt (1) besteht z.B. aus einem zylindrischen, glatten Achsrohr. Das Achsrohr (1), das als Hohlkörperprofil auch ein Mehrkantprofil sein kann, endet hier unmittelbar am Längslenkerabschnitt (10) mit einer geraden, ebenen Stirnfläche (2). Die Stirnfläche (2) ist normal zur Mittellinie (3) des Achsrohres (1) ausgerichtet. Von der Stirnfläche (2) und der Innenwandung (4) aus ist die Wandstärke des Achsrohrabschnittes (1) um weniger als ein Achtel der Wandstärke - in Form einer z.B. zylindrischen Hinterdrehung (5) - verringert. Die in Richtung der Mittellinie (3) gemessene Tiefe der Hinterdrehung (5) beträgt ca. die dreifache Wandstärke des Achsrohrabschnittes (1). Die Hinterdrehung (5) endet in einer Fase (6), deren spitzwinkeliger Fasenwinkel kleiner als 10 Winkelgrade ist.

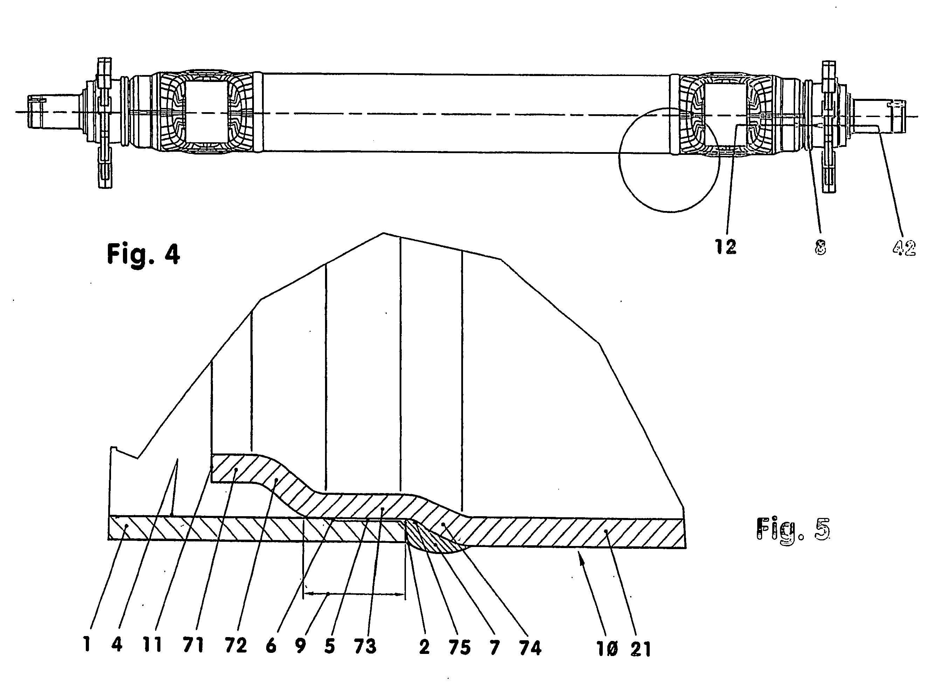

Der Längslenkerabschnitt (10) umfasst funktional ein Zentralelement (21), ein Lenkersegment (14) mit einem Gelenkauge (22) und eine Federkonsole (30). Das Zentralelement (21) ist tonnenförmig ausgebildet und hat zwei z.B. offene Stirnflächen (11, 12), vgl. Figur 4 und 5. Das in den Achsrohrabschnitt (1) bei der Montage einzuschiebende Ende mit der Stirnfläche (11) ist hier zweifach abgestuft. Von diesem Ende aus betrachtet ist die erste Abstufung der Einführabschnitt (71) und die zweite Abstufung der Zentrierabschnitt (73). Beide Abschnitte (71, 73) sind z.B. zumindest bereichsweise zylinderrohrförmig ausgebildet. Zwischen dem Zentralelementhauptbereich (23) und dem Zentrierabschnitt (73) befindet sich ein kegelstumpfmantelförmiger Übergangsbereich (74). Sein spitzer Kegelwinkel beträgt z.B. etwa 45 Winkelgrade. Zwischen dem Zentrierabschnitt (73) und dem Einführabschnitt (71) ist ein kegelstumpfmantelförmiger Übergangsbereich (72) angeordnet, der einen Kegelwinkel von z.B. ca. 75 Winkelgrade aufweist. In der Zone zwischen dem Übergangsbereich (74) und dem Zentrierbereich (73) befindet sich eine Radiuskerbe (75). Ihr Radius entspricht z.B. der mittleren Wandstärke des Zentralelements (21) und schließt tangential an den Zentrierbereich (73) an. Der Radius geht unstetig in die Kontur des Übergangsbereichs (74) über.

Zur Montage wird z.B. der Längslenkerabschnitt (10) in den Achsrohrabschnitt (1) eingeschoben. Dabei gleitet der Einführabschnitt (73), die Stirnfläche (2) passierend, in den Achsrohrabschnitt (1) hinein, bis der Übergangsbereich (72) in der Hinterdrehung (5) an der Fase (6) zur Anlage kommt. Durch die in der Regel fein bearbeitete Hinterdrehung kann der Längslenkerabschnitt einige Zentimeter in dem Achsrohrabschnitt (1) - ohne großen Kraftaufwand und unter Vermeidung einer Außermittigkeit - eingeschoben werden.

Um nun die entgültige Einschubtiefe zu erreichen, wird der Längslenkerabschnitt unter elastischem Aufdehnen des Achsrohrabschnittes und einem weitaus geringeren Schrumpfen des formsteifen, gestuften Ende des Zentralelements (21) eingepresst. Geführt durch den Übergangsbereich (72) gleitet der Zentrierabschnitt (73) auf die Innenwandung (4) des Achsrohrabschnittes (1). Beispielsweise sind nun beide Teile (1, 10) über einen kurzen Querpresssitz gegeneinander positioniert.

Die in einem Überlappungsstoß einander kontaktierenden Teile (1) und (10) werden zwischen der Stirnfläche (2) und der Außenwandung des Übergangsbereichs (74) verschweißt. Die hierbei entstehende ungleichschenkelige Wölbkehlnaht (7) hat ihre Wurzel im Bereich des Kerbradius (75).

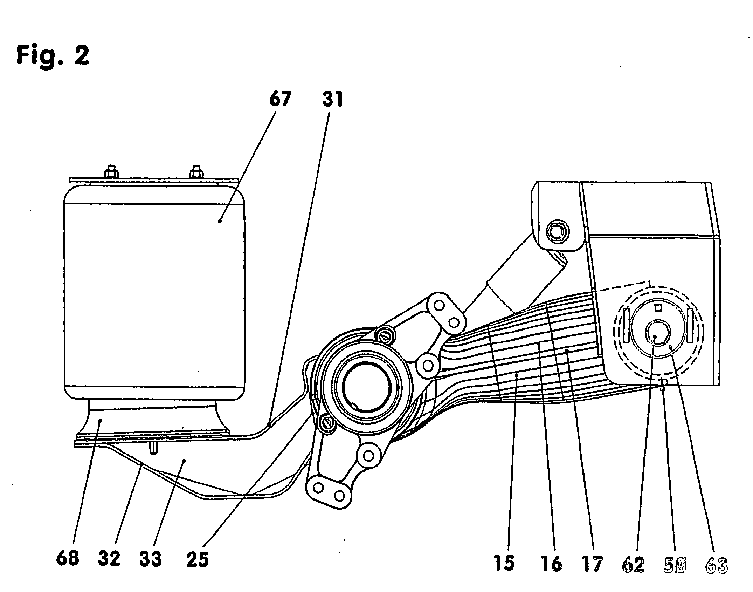

Zum Gelenkauge (22) hin schließt sich an das Zentralelement (21) das Lenkersegment (14) an. Beide Teile (21, 14) bestehen beispielsweise aus einer aus Stahlblech umgeformten Unter- (15) und Oberschale (16). Beide Schalen (15, 16) sind z.B. spiegelsymmetrisch zueinander ausgeführt und miteinander verschweißt. Die Schweißfuge liegt z.B. in einer Ebene, die durch die Achsrohrmittellinie (3) und die Mittellinie (51) des Gelenklagers (50) aufgespannt wird, vgl. Verbindungslinie (17) aus Figur 2.

Das Lenkersegment (14) hat beispielsweise über seine gesamte Länge hinweg - entlang der Verbindungslinie (17) - einen veränderlichen Querschnitt. Im Bereich des Zentralelements (21) hat es zumindest annähernd einen elliptischen Querschnitt, wobei die große Hauptachse der Ellipse parallel zur Achsrohrmittellinie (3) liegt. Im Bereich des Gelenkauges (22) ist der Querschnitt oval, wobei die vertikale Höhenausdehnung ca. zwei- bis dreimal größer ist als die horizontale Querausdehnung. Zwischen diesen äußeren Bereichen liegt zum Zentralelement (21) hin versetzt ein Bereich, der beispielsweise einen nahezu runden oder viererpolygonalen Querschnitt hat.

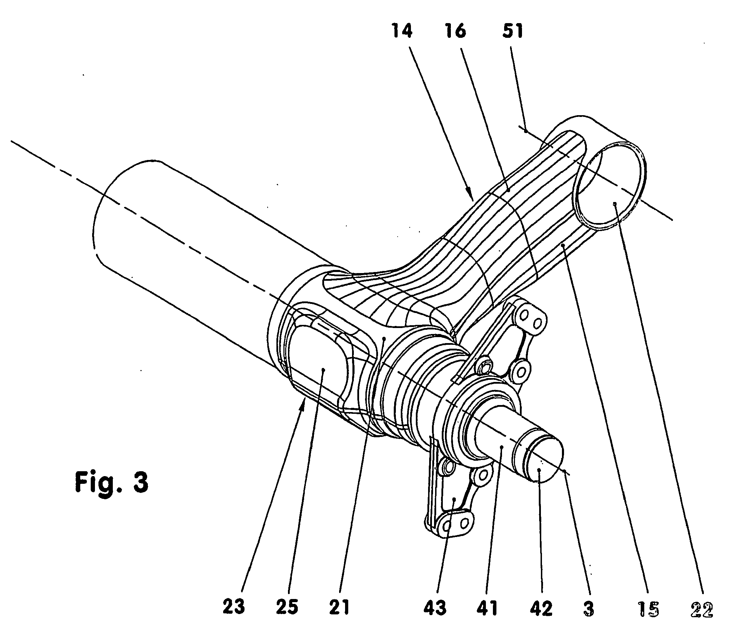

Das Zentralelement (21) hat auf der dem Lenkersegment (14) abgewandten Seite eine sog. Stütznase (23), vgl. Figur 3. Die Stütznase (23) besteht beispielsweise aus einem aufgetragenen oder angeformten Versteifungselement.

Die Federkonsole (30) ist nach den Figuren 1 und 2 als gebogener I-Träger geformt. Der I-Träger umfasst einen oberen großteils auf Zug belasteten, flachen sichelförmig gebogenen Blechgurt (31), einen vergleichbaren, mehr auf Druck belasteten, unteren Blechgurt (32) und mindestens einen zentralen Steg (33), der beide Blechgurte (31, 32) zumindest abschnittsweise verbindet. Beide Blechgurte (31, 32) tragen in ihrer Längsrichtung z.B. zweireihig Versteifungssicken. Beide Blechgurte (31, 32) liegen an der Stütznase (23) an.

Die Krümmung der Federkonsole (30) ist so gewählt, dass das obere freie Ende mit einer ebenen Fläche endet, auf der der Rollbalg (67) über einen Abrollkolben (68) aufliegt. Die ebene Fläche schließt mit der Verbindungslinie (17) ca. einen 10°-Winkel ein, vgl. Figur 2.

Die Federkonsole (30) ist mit dem Zentralelement (21) beispielsweise verschweißt, verschraubt oder in vergleichbarer Weise befestigt. Mit dem Lenkersegment (14) können so auf einfache Weise verschiedenartige Federkonsolen (30) kombiniert werden.

In der Verlängerung der Achsrohrmittellinie (3) ist neben dem Längslenkerabschnitt (10) ein Achszapfen (41) angeordnet. Letzterer ist im wesentlichen ein rotationssymmetrisches Teil zur Lagerung des Rades, das zum Längslenkerabschnitt (10) hin eine zur Mittellinie (3) normale Stirnfläche (42) aufweist. In der Nähe dieser Stirnfläche (42) ist am Achszapfen (41) ein Bremsträgerflansch (43) angeformt.

Das Achsrohr (1), die Längslenkerabschnitte (10) und die Achszapfen (41) sind alle fluchtend zueinander angeordnet. An der äußeren Stirnfläche (12) ist der Achszapfen (41) stumpf verschweißt. Als Schweißverfahren wird zwischen den Teilen (10) und (40) z.B. das Reibschweißen benutzt.

Alternativ ist auch zwischen den Teilen (10) und (40) ein Überlappungsstoß mit einer ungleichschenkeligen Kehlnaht denkbar. In diesem Fall ist dann z.B. der Achszapfen (41) im Nahtbereich aufgebohrt.

Im Lagerbock (60) ist der Längslenkerabschnitt (10) mittels eines nicht dargestellten Elastomerkörpers gelagert. Letzterer sitzt z.B. eingepresst im Gelenkauge (22). Der Elastomerkörper ist im Lagerbock (60) mit Hilfe eines Schraubbolzens (62) fixiert. Der Schraubbolzen (62) liegt am Lagerbock (60) beidseitig in Exzenterscheiben (63) zwischen seitlichen Anschlägen, z.B. zur Einstellung der Spur, an.

Am Lagerbock (60) befindet sich zur Achse hin ein quaderförmiger Vorbau (61). Zwischen diesem Vorbau (61) und einer im Wurzelbereich des Lenkersegments (14) angeordneten Schraube (66) ist einer der beiden Stoßdämpfer (65) eingebaut.

### Besugszeichenliste:

- 1: Achskörperabschnitt, Achsrohr
- 2: Stirnfläche
- 3: Mittellinie zu (1)
- 4: Innenwandung zu (1)
- 5: Hinterdrehung
- 6: Fase
- 7: Verschweißung, Schweißnaht zwischen (1) und (10)
- 8: Verschweißung, Schweißnaht zwischen (10) und (40)
- 9: Überlappung zwischen (1) und (10)
- 10: Längslenkerabschnitt, Längslenker
- 11: Stirnfläche, innen
- 12: Stirnfläche, außen
- 14: Lenkersegment
- 15, 16: Lenkerunter- und oberschale
- 17: Verbindungslinie
- 21: Zentralelement
- 22: Gelenkauge
- 23: Zentralelementhauptbereich
- 23: Stütznase
- 30: Federkonsole, Kragarm
- 31, 32: Blechgurt, oben, unten
- 33: Steg
- 40: Radkopfabschnitt
- 41: Achszapfen
- 42: Stirnfläche
- 43: Bremsträgerflansch
- 50: Gelenklager
- 51: Gelenklagermittellinie
- 60: Lagerbock
- 61: Vorbau
- 62: Schraubbolzen
- 63: Exzenterscheiben
- 65: Stoßdämpfer
- 66: Schraube
- 67: Luftfeder, Rollbalg
- 68: Abrollkolben
- 71: Einführabschnitt
- 72: Übergangsabschnitt
- 73: Zentrierabschnitt
- 74: Übergangsabschnitt
- 75: Radiuskerbe

## Patentansprüche

1. Fahrzeugstarrachse aus einem Achskörper, mit an dessen Enden angeordneten Achszapfen oder Radträgern, und mindestens zwei starr am Achskörper befestigten Längslenkern, wobei jede Hälfte der Fahrzeugstarrachse - von der Achsenmitte aus betrachtet - hintereinander angeordnet einen Achskörperabschnitt, einen Längslenkerabschnitt und einen Radkopfabschnitt umfasst und wobei der Radkopfabschnitt mindestens aus einem Achszapfen oder einem Radträger besteht, **dadurch gekennzeichnet ,**
- **dass** die Achsrohrabschnitte (1) und die Längslenkerabschnitte (10) zumindest entlang der Achsmittellinie (3) im Bereich der gemeinsamen Kontaktzonen aus einem geschlossenen Hohlprofil gefertigt sind,
- **dass** die mittlere Wandstärke der Achsrohrabschnitte (1) kleiner ist als die mittlere Wandstärke der Längslenker abschnitte (10),
- **dass** die Achsrohrabschnitte (1) mit den Längslenkerabschnitten (10) und die Längslenkerabschnitte (10) mit den Radkopfabschnitten (10) verschweißt sind,
- **dass** die zueinander benachbarten Abschnitte (1 und 10) in den Bereichen der Verschweißungen (7) zentrierend ineinander gesteckt sind, wobei die Längen der zentrierenden Überlappungen (9) kleiner als das Fünffache der mittleren rlandstärke der Achsrohiabschnitte (1) sind.

2. Fahrzeugstarrachse nach Anspruch 1, **dadurch gekennzeichnet, dass** die in den Bereichen der Verschweißungen (7) gelegenen Enden der Achsrohrabschnitte (1) oder der Längslenkerabschnitte (10) mindestens zweifach gestuft sind.

3. Fahrzeugstarrachse nach Anspruch 1, **dadurch gekennzeichnet dass** die nichtgestuften Abschnitte (1) oder (10) im Bereich der Überlappung (9) jeweils eine Hinterdrehung (5) aufweisen.

4. Fahrzeugstarrachse nach Anspruch 1, **dadurch gekennzeichnet, dass** im Bereich der Überlappung (9) die jeweiligen Abschnitte (1) und (10) über einem Klemmsitz zentriert sind.

5. Fahrzeugstarrachse nach Anspruch 1, **dadurch gekennzeichnet, dass** der maximale Außendurchmesser der Achsrohrabschnitte (1) größer ist als der maximale Außendurchmesser der Längslenkerabschnitte (10), wobei sich diese Abschnitte (1) und (10) entlang der Achsmittellinie (3) erstrecken.

6. Fahrzeugstarrachse nach Anspruch 1, **dadurch gekennzeichnet, dass** die Stirnflächen (12 und. 42) des Längslenkerabschnitts (10) und des Radkopfabschnitts (40) eben und paarweise flächengleich sind sowie parallel zur vertikalen Fahrzeugmittenlängsebene ausgerichtet sind.

7. Fahrzeugstarrachse nach Anspruch 1, **dadurch gekennzeichnet, dass** die benachbarten Stirnfläche (12 und 42) des Längslenkerabschnitts (10) und des Radkopfabschnitts (40) miteinander reibverschweißt sind.

8. Fahrzeugstarrachse nach Anspruch 1, **dadurch gekennzeichnet, dass** der einzelne Längslenkerabschnitt (10) im mittleren Bereich zwischen dem Gelenklager (50) und der Mittellinie (3) ein geschlossenes Rohrprofil mit quadratischer oder kreisrunder Kontur hat.

## Claims

1. Rigid vehicle axle, comprising an axle housing with stub axles or steering knuckles fitted to its ends and with at least two side members rigidly secured to the axle housing, wherein each half of the rigid axle of the vehicle - as viewed from the centre of the axle - comprises, arranged one behind the other, an axle housing section, a side member section and a wheel head section and wherein the wheel head section consists at least of a stub axle or a steering knuckle, **characterised in**
- **that** the axle tube sections (1) and the side member sections (10) are produced from a closed hollow section at least along the centre line of the axle (3) in the region of the common contact zones,
- **that** the average wall thickness of the axle tube sections (1) is less than the average wall thickness of the side members (10),
- **that** the axle tube sections (1) are welded to the side member sections (10) and the side member sections (10) are welded to the wheel head sections (40),
- **that** the mutually adjacent sections (1 and 10) are plugged into each other in a centring manner in the regions of the welds (7), the lengths of the centring overlaps (9) being less than five times the average wall thickness of the axle tube sections (1).

2. Rigid vehicle axle according to claim 1, **characterised in that** the ends of the axle tube sections (1) or of the side member sections (10) which are situated in the regions of the welds (7) are stepped at least twice.

3. Rigid vehicle axle according to claim 1, **characterised in that** each of the non-stepped sections (1) or (10) has a relief (5) in the region of the overlap (9).

4. Rigid vehicle axle according to claim 1, **characterised in that** the sections (1) and (10) are centred by means of a clamping fit in the region of the overlap (9).

5. Rigid vehicle axle according to claim 1, **characterised in that** the maximum outer diameter of the axle tube sections (1) is greater than the maximum outer diameter of the side member sections (10), the sections (1) and (10) extending along the centre line of the axle (3).

6. Rigid vehicle axle according to claim 1, **characterised in that** the end faces (12 and 42) of the side member section (10) and of the wheel head section (40) are flat and equal in area in pairs and are oriented parallel to the vertical central longitudinal plane of the vehicle.

7. Rigid vehicle axle according to claim 1, **characterised in that** the adjacent end faces (12 and 42) of the side member section (10) and of the wheel head section (40) are joined to each other by friction welding.

8. Rigid vehicle axle according to claim 1, **characterised in that** the side member section (10) has a closed tubular profile with a square or circular contour in the central region between the spherical plain bearing (50) and the centre line (3).

## Revendications

1. Essieu rigide de véhicule constitué d'un corps d'essieu aux extrémités duquel se trouvent des fusées d'essieu ou des supports de roue, et d'au moins deux bras longitudinaux oscillants fixés de manière rigide au corps d'essieu, chaque moitié de l'essieu rigide de véhicule, vu à partir du milieu de l'essieu, comprenant, placés les uns derrière les autres, un segment de corps d'essieu, un segment de bras longitudinal oscillant, ainsi qu'un segment de moyeu qui est constitué au moins d'une fusée d'essieu ou d'un support de roue, **caractérisé en ce que**
- les segments de tube d'essieu (1) et les segments de bras longitudinal oscillant (10) au moins le long de la ligne médiane de l'essieu (3) sont fabriqués dans la région de la zone de contact commune d'un profilé creux fermé,
- l'épaisseur centrale de paroi des segments de tube d'essieu (1) est inférieure à l'épaisseur de paroi des bras longitudinaux oscillants (10)
- les segments de tube d'essieu (1) sont soudés aux segments de bras longitudinal oscillant (10) et que les segments de bras longitudinal oscillant (10) sont soudés aux segments de moyeu (40)
- les segments (1 et 10) adjacents les uns aux autres dans les zones de soudure (7) sont de manière centrée emboîtés les uns dans les autres, les longueurs des chevauchements centrées (9) sont inférieures à l'épaisseur centrale de paroi au quintuple de l'épaisseur centrale de paroi des segments de tube d'essieu (1).

2. Essieu rigide de véhicule selon la revendication 1, **caractérisé en ce que** les extrémités des segments de tube d'essieu (1) ou des segments de bras longitudinal oscillant (10) se trouvant dans les zones des soudures (7) sont au moins à double étage.

3. Essieu rigide de véhicule selon la revendication 1, **caractérisé en ce que** les segments (1) ou (10) non étagés dans la zone de chevauchement (9) présente chacun un chambrage (5).

4. Essieu rigide de véhicule selon la revendication 1, **caractérisé en ce que** dans la zone du chevauchement (9) les segments respectifs (1) et (10) sont centrés par ajustement serré.

5. Essieu rigide de véhicule selon la revendication 1, **caractérisé en ce que** le diamètre extérieur maximum des segments de tube d'essieu (1) est supérieur au diamètre extérieur maximum des segments de bras longitudinal oscillant (10), lesdits segments (1) et (10) s'étendant le long de la ligne médiane de l'essieu (3).

6. Essieu rigide de véhicule selon la revendication 1, **caractérisé en ce que** les faces frontales (12) et (42) du segment de bras longitudinal oscillant (10) et du segment de moyeu (40) sont planes et deux par deux de même surface ainsi que parallèles au plan longitudinal central du véhicule vertical.

7. Essieu rigide de véhicule selon la revendication 1, **caractérisé en ce que** les faces frontales (12 et 42) adjacentes du segment de bras longitudinal oscillant (10) et du segment de moyeu (40) sont soudées par friction les unes aux autres.

8. Essieu rigide de véhicule selon la revendication 1, **caractérisé en ce que** chaque segment de bras longitudinal oscillant (10) présente au milieu entre l'articulation à rotule (50) et la ligne médiane (3) un profilé tubulaire fermé dont le contour est carré ou circulaire.
